# EUROPEAN PATENT APPLICATION

(11) **EP 1 517 261 A2**
(43) Date of publication of application: **23.03.2005**
(21) Application number: 04255604.3
(22) Date of filing: 16.09.2004
(51) Int. Cl.: G06F 17/60

(54) **Work-flow system and work-flow system management method**

(30) Priority: 18.09.2003 JP 2003325848; 19.12.2003 JP 2003421971
(71) Applicant: MATSUSHITA ELECTRIC INDUSTRIAL CO., LTD., Kadoma-shi, Osaka 571-8501 (JP)
(72) Inventor: Tanaka, Mitsuru, Katano-shi, Osaka 576-0052 (JP); Inagaki, Yuichi, Hirakata-shi, Osaka 573-0164 (JP)
(74) Representative: Dempster, Benjamin John Naftel

(57) **Abstract**

A work-flow system that manages a progression status without wasted effort even when the work comprises a plurality of jobs. A definition-information-memory unit that stores work-flow-definition information in which the job types and an order of processing are correlated beforehand, and a request-receiving unit receives jobs comprising mutually related tasks as one work project. Persons in charge and the order of processing are set for the received work by a person-in-charge-setting unit based on the work-flow-definition information. Also, when a task of a job is processed by a person in charge, a judgment unit determines whether or not other tasks of other jobs that are related to the task being processed have already been processed, and when it is determined that all of the other related tasks have been processed, a processing-approval unit approves processing the next tasks of that work.

## Description

### Technical Field:

This invention relates to a work-flow system, and more particularly to a work-flow system that carries out an approval process and performs a completion notification process for each task according to a defined order.

### Background to the Invention and Prior Art:

Conventionally, it has been common for several people to be in charge of advancing a work of a project. That is, after one person completes a specific task in a job that they are in charge of, the job is then given over to the next person in charge, and this next person in charge performs the next task of the job. This procedure is repeated until one complete job is finished. One work project may also be comprised of a plurality of jobs.

A work-flow system has been employed as a way of managing the progress of each task in a specified job. A work-flow system that is used for approval of a specified project may also be called groupware. For example, in the case where a certain project requires approval from someone higher up, approval can be obtained by using a computer network to circulate an approval form the sales staff to manager, section manager, department manager, etc. all the way up to the president. And if there is no problem, approval is given for the project or the project is carried out. Also, in the case of managing the progress of a job, each person in charge performs the part of the job, or in other word, the task that he/she is in charge of, then when giving the job over to the next person in charge, enters into the work-flow system that they have completed the task (completion notification). By entering that notification, it becomes possible for the next person in charge to start the next task, and it is possible to manage the progress status of the entire job.

This conventional work-flow system is targeted at comparatively simple jobs only, however, on a large scale, there are work projects with complex jobs. Here, a job is defined as comprising a plurality of tasks that are performed in order by a plurality of persons in charge. Also, a work project is defined as comprising a plurality of jobs that include mutually related tasks. The term 'mutually related tasks' here refers to tasks in one job that are related to tasks in another job.

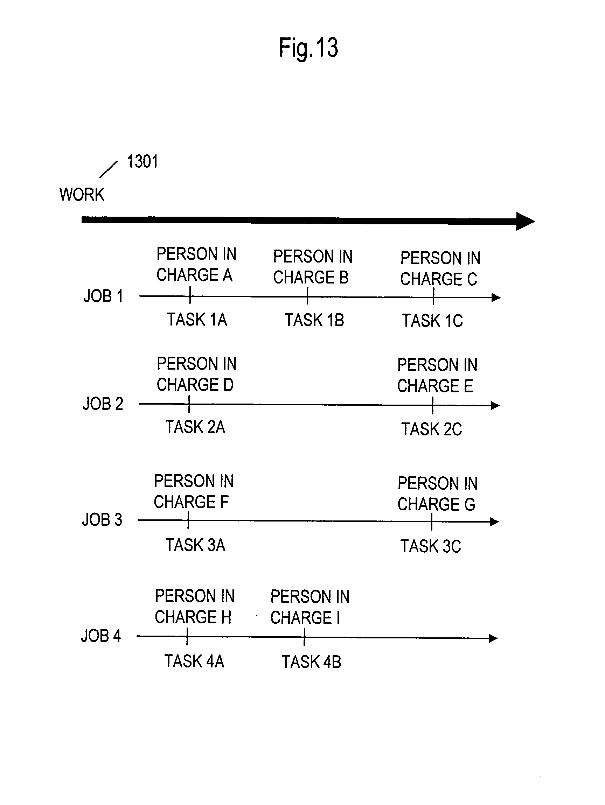

Fig. 13 shows an example of a work project mentioned above. The work project 1301 comprises a plurality of jobs (job 1 to job 4), and each job is performed in parallel by a plurality of persons in charge (persons in charge A to I) . Job 1 comprises a plurality of tasks (task 1A to task 1C).

In this case, when performing approval (task) for each job independently, or performing a job completion notification (task) in the work-flow system only, time may be wasted in the approval process or performing the job depending on the case.

In other words, the work project first takes form only after a work project 1301 is approved by all persons in charge, or all of the jobs are completed. For example, it is conceivable that even though job 1 is approved or completed properly by person-in-charge A to person-in-charge C, that job 3 may not be approved or completed by person-in-charge G. As a result in that case, the work project 1301 is not approved and the computer network has been unnecessarily burdened with communications about approval. Therefore, a problem exists in that the processing of approval tasks on the system by persons-in-charge A, B, C, D, E, F, H and I, or the uncompleted job itself becomes a waste of time.

More specifically, in the case where a request to develop (approve) a new product is performed at the same time as a request to ship samples of that product, for example, even though preparations for shipping the samples may be complete, if development of the new product has not been approved, then all of the jobs performed related to the samples were performed needlessly. The present invention aims to address at least some of these problems.

### SUMMARY OF THE INVENTION

In view of the above, the present invention provides a work-flow system and work-flow-management method that manages the progress status such that there is no waste of electronic communication capacity and time even when the work comprises a plurality of jobs.

This invention employs the following units in order to accomplish the object mentioned above. That is, this invention is a work-flow system that manages the progression status of jobs comprising a plurality of tasks that are processed in order by a plurality of persons in charge with minimum electronic communication.

In this work-flow system, a definition-information-memory unit stores work-flow-definition information in which job types and an order in which a plurality of users process the tasks of those jobs is correlated beforehand.

By sending an input screen to the terminal used by a person in charge, and then receiving the contents that were entered on the input screen, a request-receiving unit receives a plurality of jobs comprising mutually related tasks as one work project.

A person-in-charge-setting unit, based on the work-flow-definition information, sets persons in charge of processing respective tasks and the processing order for the respective tasks, the tasks being included in each of the jobs of a work project received by the request-receiving unit. Then, when a task of a job is processed by a person in charge, a judgment unit determines whether or not other tasks of other jobs that are related to the task being processed have already been processed.

When the judgment unit determines that all other related tasks have been processed, a processing-approval unit approves processing of next tasks of jobs that constitute the work project.

By doing this, when a person in charge performs a process (judgment) that makes it necessary to stop progression of the work, it is possible to prevent other processes that become unnecessary from being performed.

As construction for giving approval, a process-receiving unit sends a screen for processing a task in response to an inquiry from a person in charge only when processing of the task by that person in charge for the job corresponding to the inquiry is approved.

With this construction, a person in charge is unable to obtain the screen for processing a task that is not approved, so as a result, it is not possible to perform processing for a task that is not approved. This efficiency reduces the electronic communication burden on the computer network, there by solving the technical problem posed by the prior known system.

When processing of a task by a person in charge is a process that does not allow continuation of the job, the processing-approval unit stops all progression of the work, and that work ends. The electronic communications relating to the project which would otherwise congest the computer network are thus halted.

The processing of the task may be a notification of approval of a job and/or completion of a job, and when it is a notification of the completion of a job it may be a notification indicating, for example, that a job such as receiving, response, incoming shipment or outgoing shipment has been completed.

This work-flow system is embodied using a computer. Each of the units mentioned above except the memory unit is embodied by operating a program on the computer. Also, the memory unit can be embodied with a HDD (Hard Disk Drive) or other kind of memory.

### [Effect of the Invention]

In the work-flow system of this invention, persons in charge of tasks and the process order for respective tasks of each job constituting a work project are set-, and when each task is processed, it is determined whether or not a task that corresponds to another job has been performed, and if that task has not been performed, progression of the work is stopped. By doing this, when a person in charge performs a process (judgment) that makes it necessary to stop progression of the work, it is possible to prevent other processes that become unnecessary from being performed thereby efficiently reducing the electronic communication burden on the computer network.

### BRIEF DESCRIPTION OF THE DRAWINGS

Fig. 1 is a block diagram showing the functions of the terminal, application server and DB server of the work-flow system of this invention.
Fig. 2 is a drawing showing the construction of the application server.
Fig. 3 is a drawing showing an example of the construction of the work-flow system of this invention.
Fig. 4 is a drawing showing an example of work-flow definition information.
Fig. 5 is drawing showing an example of the work-flow master information and an image of a work project.
Fig. 6 is a drawing showing the transition of the work-flow information.
Fig. 7 is a flowchart of a request process.
Fig. 8 is a flowchart of the processing of each job.
Fig. 9 is a drawing showing an example of the request-input screen.
Fig. 10 is a drawing showing an example of work-flow main screen.
Fig. 11 is a drawing showing an example of a task-processing screen.
Fig. 12 is a drawing showing another example of a task-processing screen.
Fig. 13 is a drawing that explains the transition of a work project in a conventional work-flow system.

### DESCRIPTION OF THE PREFERRED EMBODIMENTS

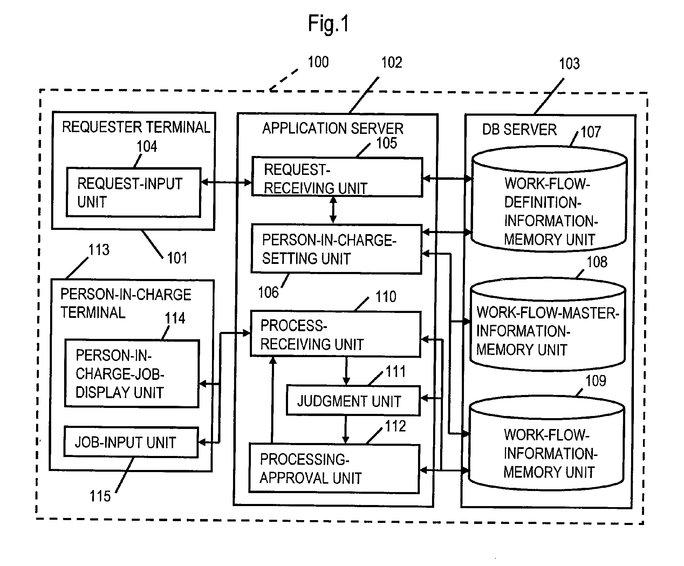

For a better understanding of the invention, the preferred embodiments of the invention will be explained below with reference to the supplied drawings. The embodiments described below are examples of the invention and do not limit the technical scope of the invention. Also, as shown in Fig. 1, the work-flow system of this invention is constructed by connecting the requester terminal 101, application server 102 and DB (database) server 103 over a network so that they can communicate with each other, however, the application server 102 and DB server 103 can be located in the same computer.

### (Embodiment 1)

Processing by the work-flow system of a first embodiment of the invention will be explained below.

Fig. 1 is a block diagram showing the functions of the requester terminal 101, application server 102 and DB server 103 of the work-flow system 100. The processing by each unit will be described later.

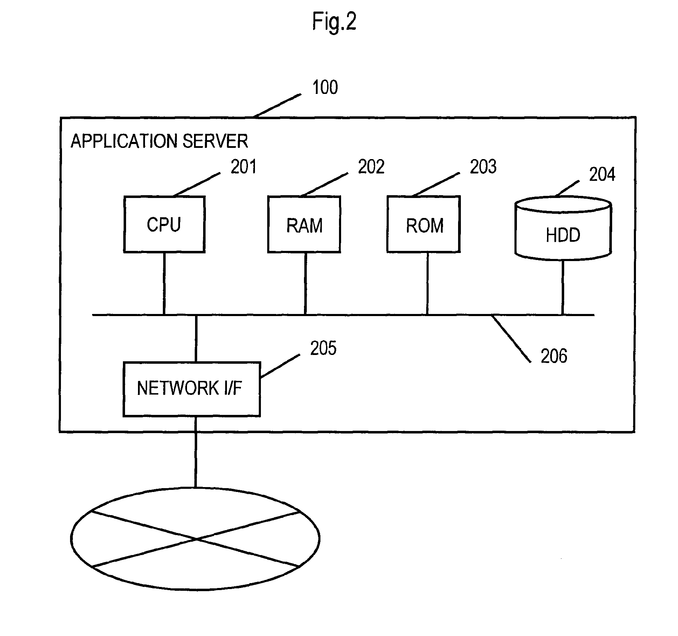

Also, Fig. 2 is a drawing showing the construction of the application server 102, where the CPU (Central Processing Unit) 201, RAM (Random Access Memory) 202, ROM (Read Only Memory) 203, HDD 204 and network I/F (interface) 205 are connected by way of an internal bus 206. The CPU 201 uses the RAM 202 as a work area, and by executing a program that is stored in ROM 203 or HDD 204, it operates as each of the units shown in Fig. 1. The network I/F 205 is connected to a network, and it can send data to or receive data from other devices. Also, the construction of the requester terminal 101 and DB server 103 are the same as that of the application server 102, and since the stored program is different, it is possible to execute different processes.

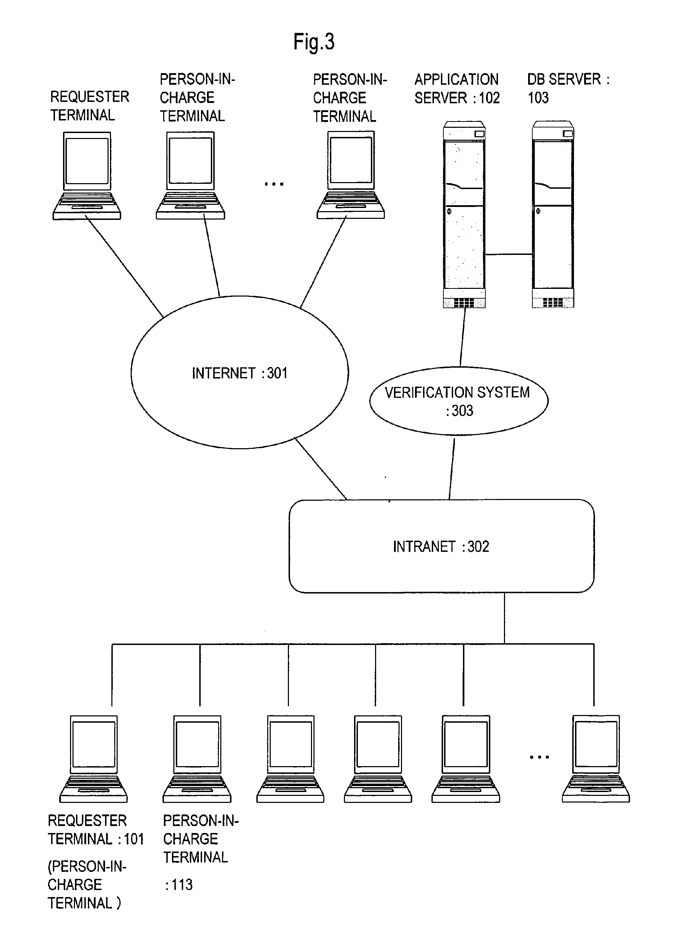

Fig. 3 is an example of the construction of the work-flow system 100, where a plurality of requester terminals 101 (person-in-charge terminals 113) are connected to the application server 102 and DB server 103 by way of a network such as the Internet 301 or Intranet 302 such that they can communicate with each other. Moreover, in the early stage of communication between the requester terminal 101 or person-in-charge terminal 113 and the application server 102, a verification system 303, for example, performs verification of the user (person in charge) using that person-in-charge terminal 113, however, since this is not directly related to this invention, a detailed explanation of it will be omitted.

Next, the processing by the work-flow system 100 will be explained. To provide a better understanding, the work that is processed is more specifically taken to be 'work related to a new mobile phone model'. In this work, the requester, who is in charge of sales, registers the following four related jobs, or in other words, four work flows as one work project.
Job 1: Request the mobile phone operations department to develop a new mobile phone.
Job 2: Request the accounting department to set a sales price for the mobile phone.
Job 3: Request that three samples be distributed to customers.
Job 4: Request that one set of English manuals and one set of Japanese manuals be distributed to the customers.

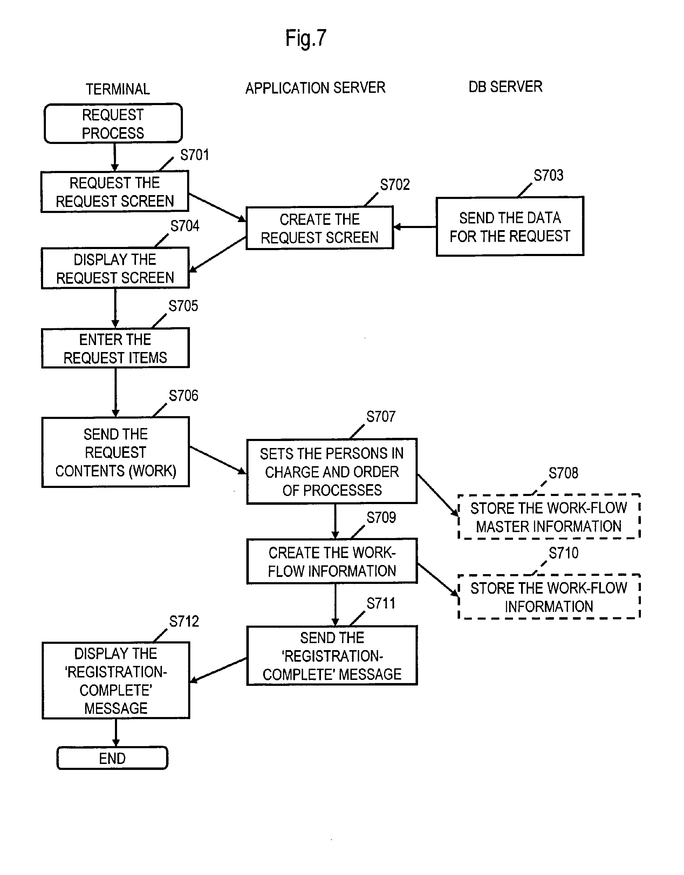

First, as shown in Fig. 7, the requester, who is in charge of sales, uses the requester terminal 101 to perform a request to register a work project. When doing this, the requester uses the requester terminal 101 to activate a request-input unit (request screen) that is installed in the terminal, or acquires the request screen by sending a request to the application server 102 for the request-input unit (Fig. 7: S701). Here, the request screen will be acquired from the application server 102.

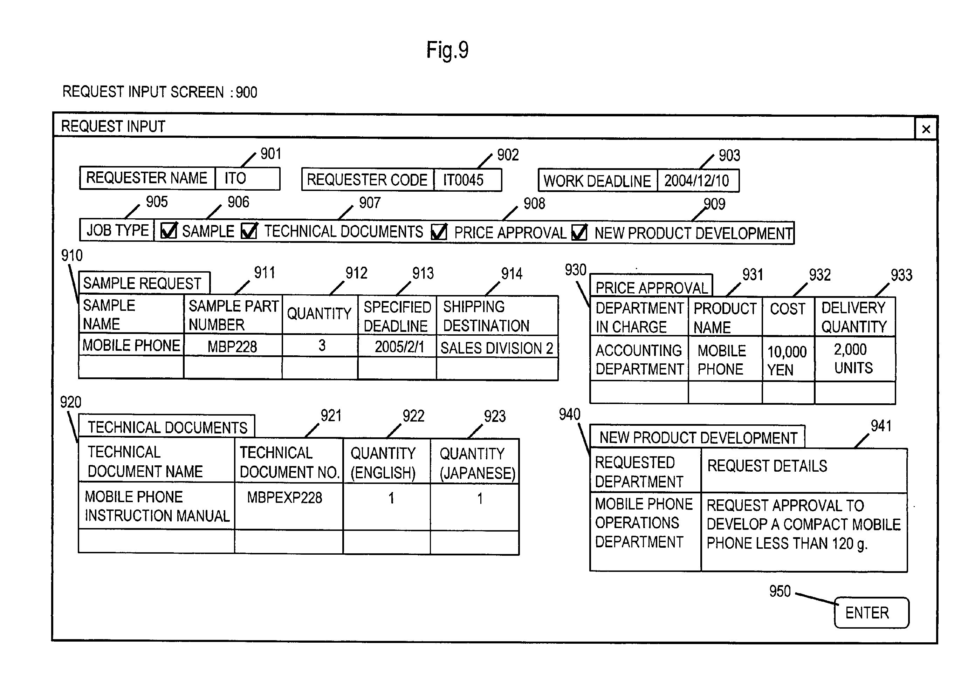

In this case, according to an instruction from the requester, the request-receiving unit 105 sends an operable script as a program that is stored beforehand in the work-flow-definition-information-memory unit 107 of the DB server 103 to the requester terminal 101 as the request-input unit 104 (Fig. 7: S702 to S703). The request-input unit 104 is executed by the requester terminal 101, and a request-input screen 900 as shown in Fig. 9 is displayed on the display unit, such as a display, of the requester terminal 101.

The requester name 901 currently using the requester terminal 101 (here, the name is 'Ito'), a requester code 902 that can identify the requester, and work deadline 903 of work comprising a plurality of jobs, are displayed on the request-input screen 900 so that they can be entered.

Also, there is an item for the job types 905 to indicate the types of jobs of the work project. Here the job types 905 are sample 906, technical documents 907, price approval 908 and new product development 909, and the requester can select a plurality of desired job types for the request.

Here, sample 906 is, for a example, a request to send a specified sample to a specified location, and when sample 906 is selected, it becomes possible to enter the items for the 'Sample Request' below. For example, the sample name 910, sample part number 911, quantity 912, sample delivery date or specified delivery date 913, and sample shipping destination 914 can be input (selected) as the 'Sample Request' items. That process corresponds to Job 3 mentioned above.

Also, technical documents 907 is a request to send technical documents to the requester, and by selecting technical documents 907, it becomes possible to enter the items for the 'Technical Documents' below. For example, the technical document name 920, technical document No. 921, quantity of English documents 922, quantity of Japanese documents 923 can be entered (selected) as the 'Technical Documents' items. This process corresponds to Job 4 mentioned above.

Moreover, price approval 908 is a request to the department in charge of setting product prices, and when price approval 908 is selected, it becomes possible to enter items for 'Price approval' below. For example, the department in charge 930, product name 931, product cost 932, delivery quantity 933, and the like can be entered (selected) as the 'Price approval' items. This process corresponds to Job 2 mentioned above.

Furthermore, new product development 909 is a request for approval to develop a new product, and when new product development 909 is selected, it becomes possible to enter items for 'New Product Development' below. For example, the requested department 940, request details 941 and the like can be entered (selected) as the 'New Product Development' items. This process corresponds to Job 1 mentioned above.

The job types and the contents of each item are just examples, and job types and items that are necessary to be managed by the work-flow system can be set according to the system. In this invention, it is possible to have a plurality of job types for one work project.

Also, in this embodiment, as shown on the request-input screen 900, 'Ito' was input as the requester name 901, 'IT0045' was input as the requester code 902, '2004/12/10' was input as the work deadline 903, and sample 906, technical document 907, price approval 908 and new-product development 909 were all selected as the job types.

Moreover, as the 'Sample Request' items, 'Mobile Phone' was input as the sample name 910, 'MBP228' was input as the sample part number 911, '3' was input as the quantity 912, '2005/2/1' was input as the specified delivery date, and 'Sales Division 2' was input as the shipping destination 914.

Furthermore, as the 'Technical Document' items, 'Mobile Phone Instruction Manual' was input as the technical document name 920, 'MBPEXP228' was input as the technical document No. , '1' was input as the quantity (English) 922, and '1' was input as the quantity (Japanese) 923.

Also, as the 'Price approval' items, 'Accounting Department' was input as the department in charge 930, 'Mobile Phone' was input as the product name 931, '10,000 yen' was input as the cost 932, and '2, 000' was input as the number of delivered units.

Furthermore, as the 'New Product Development' items, 'Mobile Phone Operations Department' was input as the requested department 940, and 'Request approval to develop a compact mobile phone that is less than 120g. ' was input as the request details 941.

The requester enters the items described above as necessary, and when the requester presses the input button 950, the request-receiving unit 105 receives the request contents (Fig. 7: S705 to S706).

After the request-receiving unit 105 receives the request contents, the person-in-charge-setting unit 106 assigns a work No. to the received work (here, the number is 'A00101'), and based on the work-flow-definition information that is stored in the work-flow-definition-information-memory unit 107, it sets the persons in charge and order of processing for each task of each job (sample, technical document, price approval, new-product development) of the work (Fig. 7: S707).

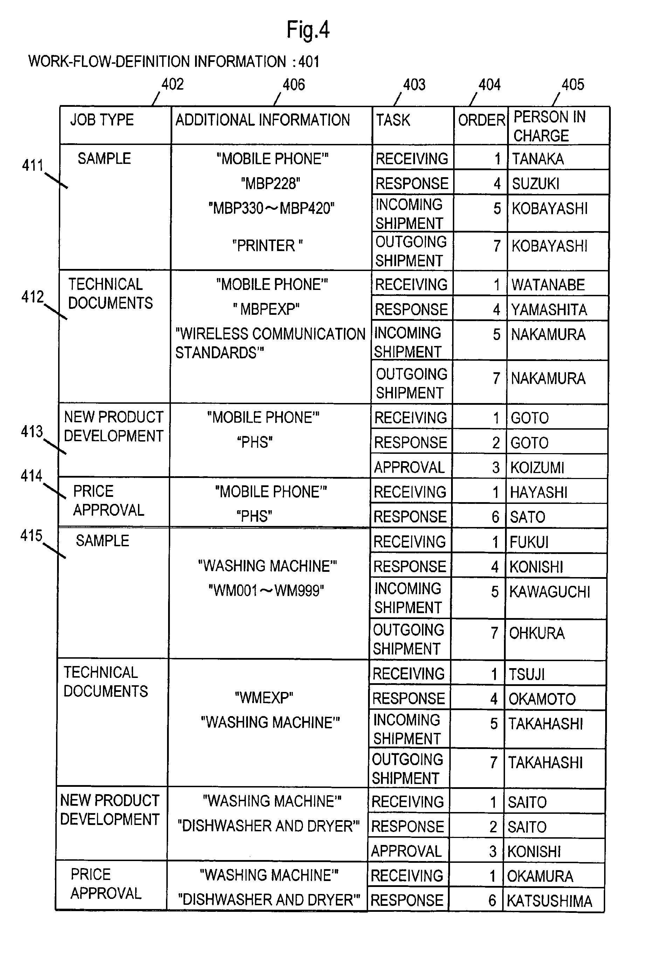

Here, the processing by the person-in-charge-setting unit 106 will be explained in detail. An example of the work-flow-definition information is shown in Fig. 4. The job types 402, additional information 406, tasks 403, order 404 and the persons in charge 405 are stored in the work-flow-definition-information 401 shown in Fig. 4.

The job types 402 indicate the kinds of jobs, and correspond to the job types 905 described above. The job types shown here is just an example and various job types can be prepared according to the job.

The additional information 406 stores information that can identify the department in charge of the corresponding job type. For example, even for the same job type 'Sample', there are different departments in charge (managing departments) depending on the type of sample, so which job type 'Sample' it is, is identified from the request contents and the additional information 406 that are entered. In other words, the person in charge of sample 411 and sample 415 (described later) are totally different people. Therefore, even though the job type of the work is the same, control of the work flow is completely different.

For example, here sample 411 is selected from the sample name 910: 'Mobile Phone', and sample part number 911: 'MBP228'. Similarly, technical documents 412, new product development 413 and price approval 414 are selected based on the request contents.

Task 403 lists the contents of the processing performed when the job type is selected, for example, the processing contents corresponding to 'Sample' are 'Receiving', 'Response', 'Incoming Shipment', 'Outgoing Shipment'. However, when the there is only one type of processing that is managed in the work-flow system, this is not necessarily required.

Order 404 shows the order in which a processing indicated in the processing contents are performed. Also, person in charge 405 is the name of the person in charge of performing the task.

In the example above, the person-in-charge-setting unit 106 automatically sets the job types based on the work-flow-definition information 401 and the contents of the request input, however, the request-receiving unit 105 can send the work-flow-definition information 401 to the requester terminal 101 as a list, and the requester can select the job types directly.

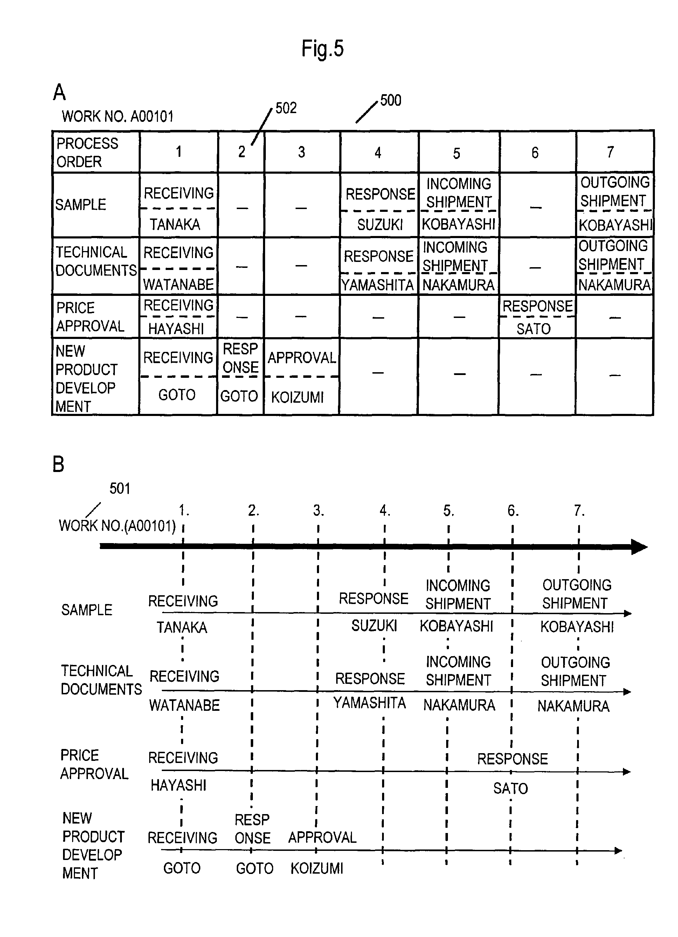

The persons in charge and the order of tasks that are set by the person-in-charge-setting unit 106 are stored in the work-flow-master-information-memory unit 108 of the DB server 103 as work-flow-master information 500 shown in Fig.5A. (Fig. 7: S708). At this time, in addition to the work-flow-master information 500 each of the items input on the request-input screen 900 are stored. For explanation purposes, the persons in charge and the task order were stored as work-flow-master information, however, they do not necessarily need to be stored as work-flow-master information. For example, in case work-flow-definition information is referenced each time when work-flow information (described later) is updated, work-flow-master information is not necessary.

Furthermore, to provide a better understanding, an image of the work-flow-master information shown in Fig. 5A is shown in Fig. 5B. As shown in this image, the work (A00101)501 comprises the jobs 'Sample', 'Technical Documents', 'New Product Development' and 'Price approval', and at least one person in charge is registered for each task of each job. For example, the persons in charge of each of the tasks of the job 'Sample' are: order 1 task 'Receiving': Tanaka; order 4 task 'Response': Suzuki; order 5 task 'Incoming Shipment' and order 7 task 'Outgoing Shipment' : Kobayashi. Of course the contents correspond to sample 411 of the work-flow-definition information 401. The number in front of each task indicates the order of the process. Also, a ' - ' symbol indicates that there is no one in charge.

As can be seen from Fig. 5B, in this embodiment, the work is such that first 'Receiving' is performed for each selected job, then, 'Response' and 'Approval' are performed for 'New Product Development'. After approval is obtained for 'New Product Development, the jobs 'Sample' and 'Technical Documents' are performed at the same time, and after the 'Incoming Shipment' task has been performed for these two jobs, the task 'Response' for the job 'Price approval' must be performed. These conditions are set according to the order 404 of the work-flow-definition information 401.

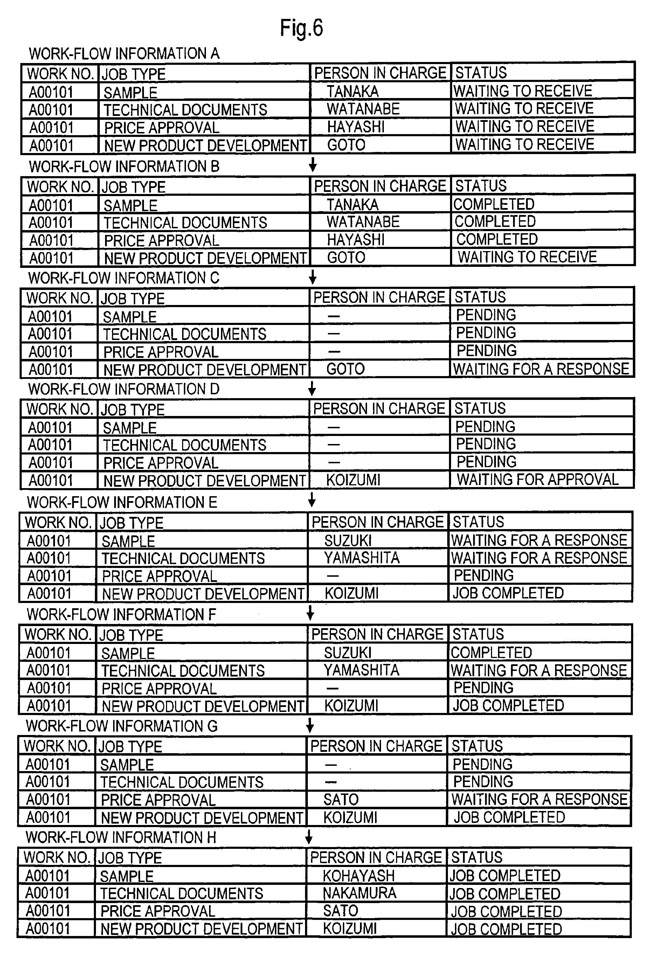

Furthermore, the person-in-charge-setting unit 106 creates the work-flow information A shown in Fig. 6, and stores it in the work-flow-information-memory unit 109 in the DB server 103 (Fig. 7: S709 to S710). Work-flow information A is created based on the work-flow master information or information sent from the request-input unit 104, however, the information shown in Fig. 6 is only an example, and it could be in any form as long as it can be processed by the judgment unit 111 (described later).

After the work-flow-master information 500 has been stored in memory, the request-receiving unit 105 sends a notification to the requester terminal 101 indicating that the work project input by the requester has been properly registered, and the requester terminal 101 displays that notification (Fig. 7: S711 to S712).

In the process described above, the process for requesting (registering) work is complete.

Next, the procedure by which each person in charge enters whether or not the process for the job that he/she is personally in charge of is completed or approved will be explained.

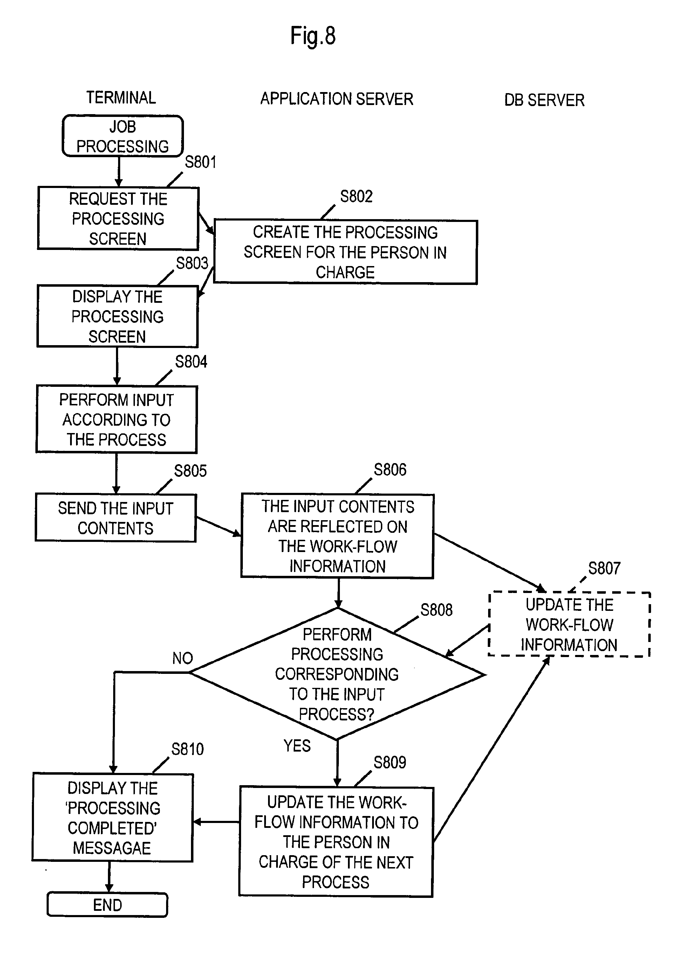

When the persons in charge of each of the tasks desire to process (input) the task that they are personally in charge of, they use the person-in-charge terminal 113 to access the process-receiving unit 110 of the application server 102 (Fig. 8: S801). The person-in-charge terminal 113 has the same construction as the requester terminal 104 described above.

When accessing the process-receiving unit 110, the verification system mentioned above intervenes so it is possible to know who is accessing the process-receiving unit 110.

Here, the person in charge is taken to be 'Yamashita'. When Yamashita tries to access the process-receiving unit 110, the process-receiving unit 110 references the work-flow information and searches for the information for which 'Yamashita' is in charge of. Currently, the status of the work-flow information is work-flow information A and there are no jobs for which 'Yamashita' is in charge of. Therefore, the process-receiving unit 110 stores information indicating that there are currently no jobs for which Yamashita is in charge of in the script that is stored as a program, and sends it to the person-in-charge terminal 113 as a person-in-charge-job-display unit 114 (Fig. 8: S802). Here, since there are no jobs for which the person in charge 'Yamashita' is in charge of, processing ends without the person in charge entering (confirming) a job (Fig. 8: S802 to End).

In the process described above, even when a job related to the person in charge is registered in the work, that person is not displayed as the 'person in charge' in the work-flow information. Therefore, in the case where 'New Product Development' is not approved, for example, that person in charge cannot start a job in which there are tasks that could be performed needlessly if the job is performed.

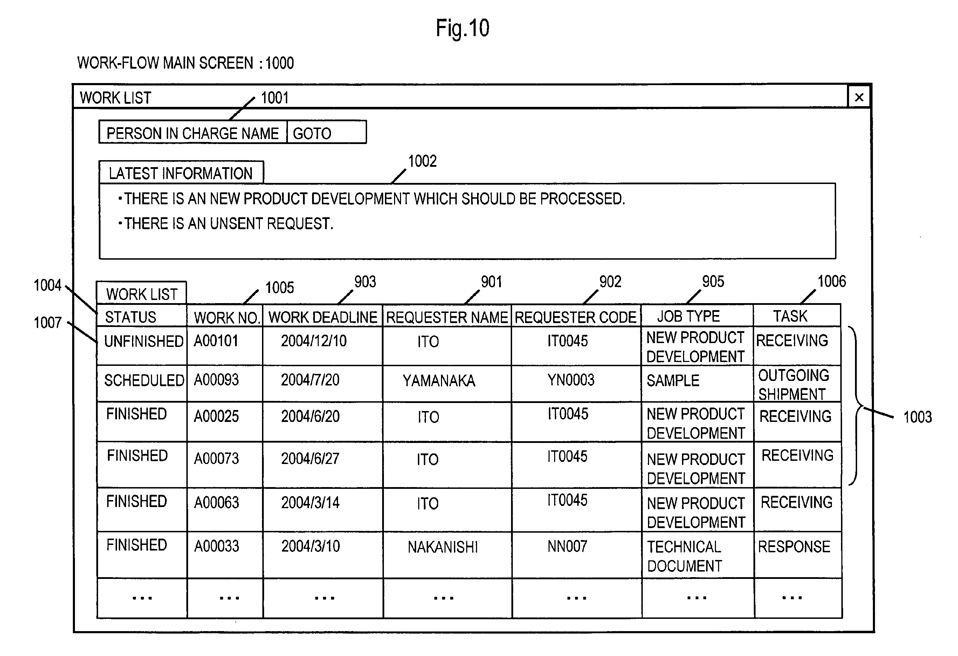

Even when there is no person in charge in the work-flow information, the process-receiving unit 110 could be such that it displays the work-flow main screen. An example of the work-flow main screen is shown in Fig. 10. The name of the person in charge 1001 that is currently using the work-flow system, new information 1002 about the work flow, and a work-flow list 1003 are displayed on the work-flow main screen 1000. A detailed example of the work-flow main screen and an explanation of each of the items on the screen will be explained below for the person in charge 'Goto'.

The 'Person in Charge' and 'Status' of work-flow information A is updated based on information sent from each person in charge by way of the request-input unit 104. For example, when 'Tanaka' enters that the 'Receiving' task of the job type 'Sample' has been completed, the process-receiving unit 110 (to be described later) updates the 'Status' corresponding to 'Sample' in the work-flow information A from 'Waiting to Receive' to 'Completed'. Also, other jobs are performed at the same time and processing is performed by other persons in charge, and when 'Watanabe' enters that the 'Receiving' task of job type 'Technical Documents' has been completed, then similarly, the process-receiving unit 110 updates the 'Status' corresponding to 'Technical Documents' in the work-flow information A from 'Waiting to Receive' to 'Completed'. Similarly, when 'Kobayashi' enters that the 'Receiving' task of the job type 'Price approval' has been completed, the process-receiving unit 110 updates the 'Status' corresponding to 'Price approval' of the work-flow information A from 'Waiting to Receive' to 'Completed'.

The processing by the process-receiving unit 110 will also be explained in detail below using the person in charge 'Goto' as an example.

The work-flow information A is updated to the work-flow information B shown in Fig. 6 based on the input from the persons in charge 'Tanaka', 'Watanabe' and 'Kobayashi'. Work-flow information B shows that the status for job types 'Sample', 'Technical Documents' and 'Price approval' is 'Completed', and that the status for job type 'New Product Development' is 'Waiting to Receive'.

Next, the person in charge 'Goto' similarly accesses the process-receiving unit 110. After that access has been received, the process-receiving unit 110 extracts all of the work for which' Goto' is listed as a person in charge in work-flow information, and displays the work list 1003 on the work-flow main screen 1000. Here, the items for the appropriate task are obtained from the work-flow-master information 500 stored in the work-flow-master-information-memory unit 108 based on the management No. 'A00101' of work-flow information A and the job type 'New Product Development'. The items obtained are, for example, work No. 1005, work deadline 903, requester name 901, requester code 903, job type 905 and task 1006. Here, the work No. 1005 is a work No. ('A00101') that is assigned by the request-receiving unit 105 when the work is registered. The other information, work deadline 903, requester name 901, requester code 902 and job type 905, is information that has already been input on the request-input screen, and is set by the person-in-charge-setting unit 106. When obtained from the work-flow information, 'Unfinished' is entered for the status 1004. Also, for work in which 'Goto' is included in the work-flow-master information instead of the work-flow information, it is possible to extract all of the information that is not included in the work-flow information. In that case, as shown in the work list 1003, it is possible to extract items for which the status 1004 is 'Finished', and items for which there is a person in charge of the task but for which processing cannot be entered (status 1004 = 'Scheduled').

After the process-receiving unit 110 obtains the items, it creates the work-flow main screen 1000 based on the obtained items, and sends that screen to the person-in-charge terminal 113 as the job-input unit 115 (Fig. 8: S802).

Next, the person in charge 'Goto' uses the work-flow main screen 1000 to select the task whose status 1004 is 'Unfinished' , or in other words, selects unfinished task 1007, and a notification that it was selected is sent to the process-receiving unit 110.

After the process-receiving unit 110 receives that notification, it obtains the specified items from the work-flow-master information based on work No. 1005 'A00101'. More specifically, it obtains job type 'New Product Development' and process contents 'Receiving' that correspond to work No. 'A00101' and person in charge 'Goto', as well as 'Mobile Phone Operations Department' that corresponds to the requested department 940 and 'Request approval for new development of a compact mobile phone that is less than 120 g.' that corresponds to the request details 941 that were input at the time of the request.

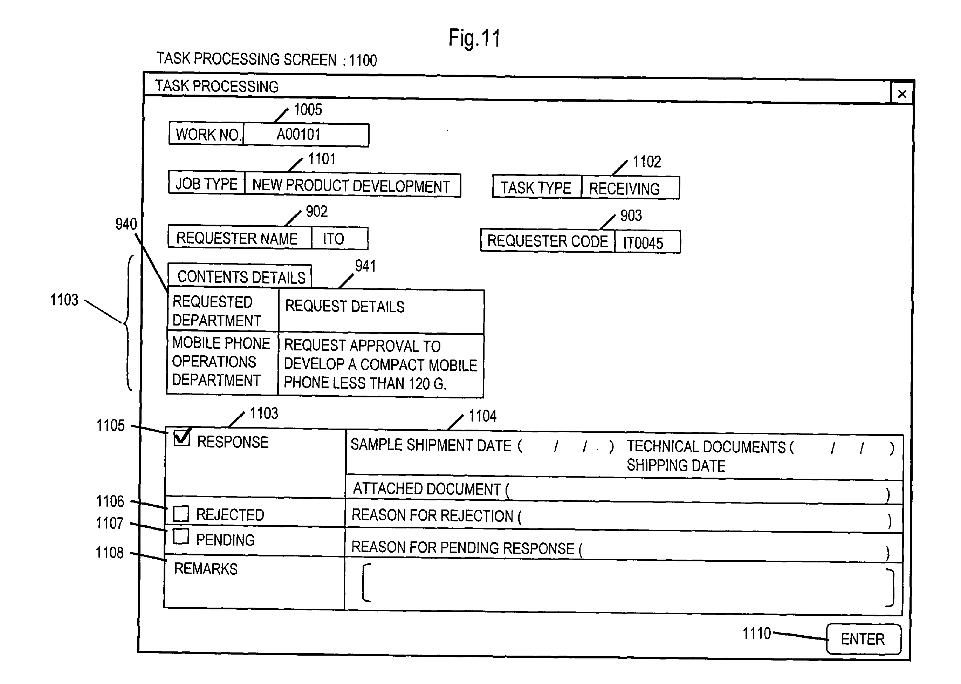

Next, the process-request unit 110 creates the task-processing screen 1100 as shown in Fig. 11 based on the obtained items, and by sending it to the person-in-charge terminal 113 as the job-input unit 115, it is displayed on the display apparatus of the person-in-charge terminal 113.

The work No. 1005, job type 1101, task type 1102, requester name 901 and requester code 903 described above are displayed on the task-processing screen 1100. Moreover, 'Mobile Phone Operations Department' that corresponds to the requested department 940 and 'Request approval to develop a compact mobile phone less than 120 g.' that corresponds to the request details 941 that were entered at the time of the request are displayed in the contents details 1103.

Also, in addition to the display described above, input items 1103 that can be input by the person in charge, and supplementary items 1104 are added to the task-processing screen 1100. The 'Response' that corresponds to an OK for the task 'Receiving', 'Rejected' 1106 that indicates NG, 'Pending' 1107 that indicates the response is pending and 'Remarks' 1108 that can be freely input are located in the input items 1103. Moreover, items that can be selected and input based on each response are located in the supplementary items 1104.

After the process-receiving unit 1100 is displayed, the person in charge 'Goto' performs the necessary input according to the process (Fig. 8: S803). Here, for example, the 'Response' , which is input to indicate that the task 'Receiving' is completed, is selected. After the input is performed and the input button 1110 is pressed, the input information is sent to the process-receiving unit 110 (Fig. 8: S804).

When the process-receiving unit 110 receives the input information indicating the completion of the task, it updates the 'Status' corresponding to 'New Product Development' of work-flow information A from 'Waiting to Receive' to 'Completed' (not shown in the figure) (Fig. 8: S806 to S807).

After the process-receiving unit 110 has completed changing the work-flow information, next the judgment unit 111 determines whether or not all of the tasks corresponding to order '1' of other jobs 'Sample', 'Technical Documents' and 'Price approval' corresponding to order '1' performed by 'Goto' have been performed (Fig. 8: S808). The corresponding tasks referred to here are tasks having the same order 404. In other words, the same order is assigned to processes for which there is no problem if they are performed at the same time. That is, taking it to be a priority order is also possible.

Here, other jobs having tasks corresponding to order '1' in Fig. 5B are 'Sample'. 'Technical Documents' and 'Price approval', and looking at work-flow information B, the status of the other jobs is 'Completed'. Therefore, all of the tasks corresponding to order '1' of the other jobs are completed. From this, the judgment of the judgment unit 111 is 'All Completed' (Fig. 8: S808-YES to S809).

When the judgment unit 111 determines 'All Completed' , the processing-approval unit 112 gives approval for processing by the next persons in charge of all of the jobs related to work 'A00101'. More specifically, based on order '2' (502) of the work-flow-master information 500, it updates the person in charge of 'New Product Development' of work-flow information B to 'Goto', and based on the process contents 'Response', updates the status to 'Waiting for a Response'. At this time, there is no person in charge for the other jobs 'Sample', 'Technical Documents' and 'Price approval' that correspond to order '2' (502) of the work-flow-master information 500, so a ' - ' is placed in the item for each respective person in charge, and the status becomes 'Pending'. As a result, work-flow information B is updated to work-flow information C shown in Fig. 6 (Fig. 8: S809).

After the processing-approval unit 112 updates the work-flow information B, the process-receiving unit 110 sends a (Receiving) process-complete message to the person-in-charge terminal 113, and that message is displayed by the person-in-charge terminal 113 (Fig. 8: S809 to S810). Moreover, even when the work-flow information B is not updated, the process-receiving unit 110 sends a (Receiving) process completed message to the person-in-charge terminal 113, and that message is displayed on the person-in-charge terminal 113 (Fig. 8: S808-NO to S810).

Next, after 'Goto' uses the person-in-charge terminal to similarly perform the task 'Response', the judgment unit 111 similarly determines whether or not all of the processes corresponding to order '2' of the other jobs have been completed. Here, 'Goto' is the only registered person in charge of a job corresponding to order '2' in Fig. 5B, and the status of the other jobs in work-flow information C is 'Pending' ('Waiting for a Response' has already been changed to 'Completed' ) . Here, if 'pending' considers that it is the same as that of 'Completed', all tasks to an order '2' in other jobs have been completed. From this, the judgment unit 111 determines that all of the processes corresponding to order '2' have been completed, and the work-flow information C is updated to work-flow information D as shown in Fig. 6.

Next, after the person in charge 'Koizumi' of the task 'Approval' for job 'New Product Development' has similarly performed that task, the judgment unit 111 similarly determines that all of the processes corresponding to order '3' for the other jobs have been completed. Moreover, work-flow information D is updated to work-flow information E as shown in Fig. 6. Here, the person in charge corresponding to 'Sample' is updated to 'Suzuki' and the status is updated to 'Waiting for a Response', and similarly the person in charge corresponding to 'Technical Documents' is updated to 'Yamashita' and the status is updated to 'Waiting for a Response'. There is no task corresponding to order '4' for job 'Price approval', so the status stays the same.

It is possible to update the status of 'New Product Development' to Completed' , however, here it is updated to 'Job Completed'. The judgment unit 111 determines 'Job Completed' in the same way as 'Completed'.

As described above, in this example, after all of the jobs have been received, then first, the response process and approval process for 'New Product Development' are performed, and only after those processes have finished is it possible to perform the 'Response' process for 'Sample' and 'Technical Documents' . In this way, it is possible to prevent a condition like that, after 'Response' processing has been performed for 'Sample' and 'Technical Documents' , a 'New Product Development' request is rejected, and as a result, all other jobs for that new product, such as the 'Response' process for the jobs 'Sample' and 'Technical Documents' are performed needlessly.

On the other hand, after the receiving process has finished for all jobs, processing waits for the response process and approval process for the 'New Product Development' request, and after the 'New Product Development' request has been approved, it is possible to promptly start the following processes.

Moreover, in the case where a 'Sample' request is performed separately for an already existing product, processing advances to the next process as soon as the preceding process ends.

The processing by the judgment unit 111 in the case for 'Goto' and 'Koizumi' is the same, however, when 'Suzuki' performs the response process after 'Koizumi', work-flow information E is updated to work-flow information F as shown in Fig. 6, and the 'Status' corresponding to 'Sample' is updated to 'Completed' . In this state, the judgment unit 111 determines whether or not the tasks corresponding to order '4' of the jobs other than 'Sample' are completed. Here, as shown in work-flow information F, the 'Status' that corresponds to 'Technical Documents' becomes 'Waiting for a Response'. In other words, processing of the task (response) that 'Yamashita' is in charge of has not been performed, and the judgment unit 111 determines that the task corresponding to order '4' of the other job (here, it is technical documents) has not been completed.

Therefore, the processing-approval unit 112 doesn't perform an 'update for allowing processing by the next persons in charge' that is approval of processing by the next persons in charge for work-flow information F (Fig. 8: S809). As a result, 'Kobayashi' and 'Nakamura', who correspond to the next process, 'Incoming Shipment' of order '5', cannot process the task themselves using the person-in-charge terminal 113.

In this state, when 'Yamashita', who is in charge of '4. Response' for the job 'Technical Documents, has not performed that task, or when the work cannot be continued because 'Response Rejection' was selected, the work (A00101) cannot advance. In other words, the tasks '5. Incoming Shipment' and '6. Outgoing Shipment' for the job technical documents, the tasks '5. Incoming Shipment' and '7. Outgoing Shipment' for the job sample, and the task' 6 . Response' for the job price approval become unnecessary and do not need to be performed because of the processing not performed by 'Yamashita'. Also, considering the two jobs that conventionally could be processed independently at the same time, in other words, the jobs sample and technical documents in Fig. 5B, in this invention, processing is mutually checked for each task. By doing this, in the case where the task performed by 'Watanabe' , who is in charge of receiving for the job technical documents, is not allowed, processing of the job sample cannot advance beyond 'Response'. As a result, it is possible to prevent the condition like that, after the tasks for the job sample have advanced to incoming shipment, receiving of technical documents is rejected, and the tasks for the job sample from being performed needlessly.

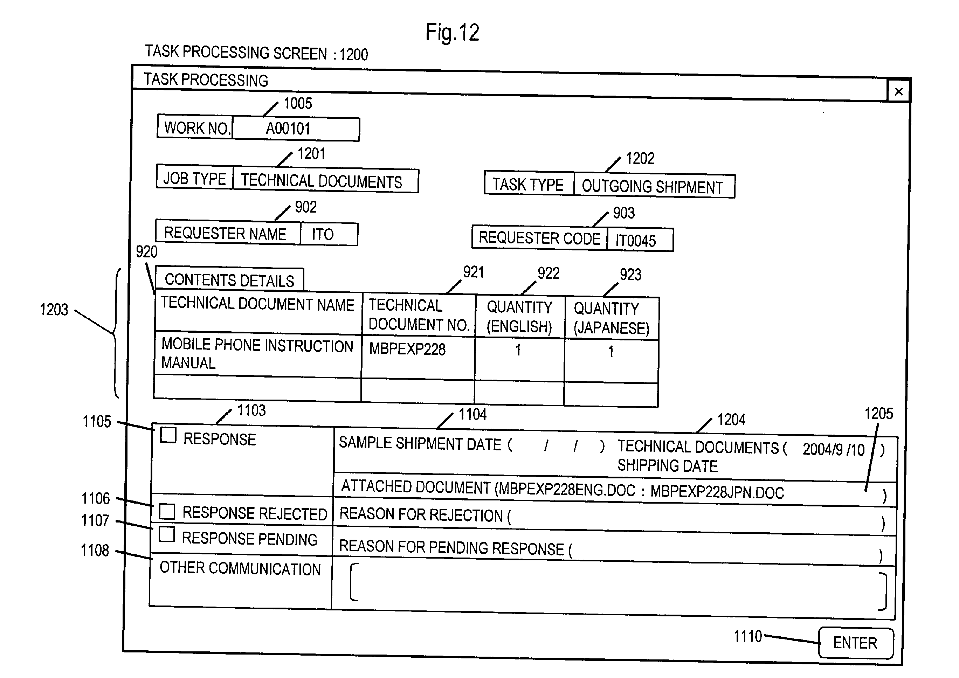

Moreover, as another example of task processing, the processing of the task 'Outgoing Shipment' corresponding to the job technical documents in charge of by 'Nakamura' will be explained. In the flow of the job technical documents, the job is received by 'Watanabe' in the 'Receiving' task, and whether or not to disclose the technical documents is determined in the task 'Response' performed by 'Yamashita'. Here, Nakamura performs the tasks 'Incoming Shipment' and 'Outgoing Shipment' (actually, ordering and shipping). The 'Outgoing Shipment' process is performed using a task processing screen 1200 as shown in Fig. 12. More specifically, the job type 1201: technical documents and task type 1202: Outgoing Shipment are displayed on the task processing screen 1200. Also, the technical-document name 920: 'Mobile Phone Instruction Manual', technical-document No. 921: 'MBPEXP228', quantity of English documents 922: '1' and quantity of Japanese documents 923: '1' are displayed in the contents details 1203. The other items are the same as those shown in Fig. 11.

In this state, when Nakamura sends the technical documents, it is possible to send technical documents such as for electronic data. In this case, after the shipping date '2004/9/10' is entered for the technical-documents-shipping date 1204, and two electronic data documents, 'MBPEXP228ENG.doc' and 'MBPEXP228JPN.doc' are attached as technical documents in attachments 1205, it is possible to select 'Response' for the first time. In other words, 'Response' cannot be selected when no electronic data is attached.

Whether or not there are documents necessary for the job to advance is checked by an attachment detection unit which constructs the system in this way, and when there is no problem (when documents are attached) , it is then possible for the job to advance to the next task by a processing input unit. This makes it possible to control the advancement in one job (for example in this case, technical documents) in addition to linking all of the jobs (here, sample, technical documents, price approval and new product development). Documents that are required differ accord to the work whose work flow is being managed, and as an example may include, estimates, request forms, financial forms, inspection forms, etc.

When each of the persons in charge, including 'Yamashita' and 'Nakamura', have performed the tasks that they are personally in charge of with no problems, then the work-flow information G in Fig. 6 is updated to work-flow information H.

As described above, persons in charge of processing respective tasks and the process order for the tasks, the tasks being included in each of the jobs of a work project are set, and it is determined whether or not a task that corresponds to another job has been performed, and if that task has not been performed, the work is not advanced. By doing this, when a person in charge performs a process (judgment) that makes it necessary to stop progression of the work, it is possible to prevent other processes that become unnecessary from being performed thereby efficiently reducing the electronic communication burden on the computer network.

### [Industrial Applicability]

The work-flow system of this invention makes it possible to prevent other processes that become unnecessary from being performed beforehand, so it can be applied as a work-flow system for managing the processing status of work comprising a plurality of jobs that are processed in order by a plurality of persons in charge. This efficiency reduces the electronic communication burden on the computer network, there by solving the technical problem posed by the prior known system.

## Claims

1. A computer system for work-flow system that manages a progression status of jobs comprising a plurality of tasks that are processed in order by a plurality of persons in charge, and comprising:
a definition-information-memory unit (107) that is operable to store work-flow-definition information in which job types and an order in which a plurality of users process the tasks of those jobs is correlated beforehand;
a request-receiving unit (105) that is operable to receive a plurality of jobs comprising mutually related tasks as one work project;
a person-in-charge-setting unit (106) that, based on the work-flow-definition information, is operable to set persons in charge of processing respective tasks and the processing order for the respective tasks, the tasks being included in each of the jobs of a work project received by the request-receiving unit;
a judgment unit (111) that, when a task of a job is processed by a person in charge, is operable to determine whether or not other tasks of other jobs that are related to the task being processed have already been processed; and
a processing-approval unit (112) that, when the judgment unit determines that all other related tasks have been processed, is operable to approve processing of next tasks of jobs that constitute the work project.

2. The work-flow system of claim 1 further comprising:
a process-receiving unit (110) that is operable to send a screen for processing a task in response to an inquiry from a person in charge when the processing-approval unit has approved processing of the task corresponding to the inquiry by that person in charge.

3. The work-flow system of claim 1 wherein, when processing of a task by a person in charge is a process which does not allow continuation of the job to which the task belongs, the processing-approval unit stops all progression of the work to which that job belongs.

4. The work-flow system of claim 3 wherein the process of the task is approval of a job and/or notification of completion of a specific process.

5. The work-flow system of any preceding claim, the system further comprising
an attachment detection unit that is operable to detect whether a data attachment, such as a word processing document, has been input to the system associated with a particular task; and
a processing input unit that is operable to input of data to indicate that a task has been processed, wherein the processing input unit is arranged such that the data to indicate that a task has been processed cannot be entered for that particular task if the attachment detection unit detects that a data attachment has not been input for that task.

6. A management method for a work-flow system, to be conducted on a computer, the method being for managing the progression status of jobs comprising a plurality of tasks that are processed in order by a plurality of persons in charge, the method comprising:
a request-receiving step in which a plurality of jobs, comprising mutually related tasks are received in the computer as one work project;
a person-in-charge-setting step in which persons in charge are set and the processing order is set for the tasks, the tasks being included in each of the jobs of a work project received in the request-receiving step;
a judgment step in which, when a task of a job is processed by a person in charge, it is determined whether or not other tasks of other jobs that are related to the task being processed have already been processed; and
a processing-approval step in which, when it is determined in the judgment step that all other related tasks have been processed, approves processing of next tasks of jobs that constitute the work project.

7. A computer program or suite of computer programs so arranged such that when executed by a computer it/they cause the computer to perform the method of claim 5.

8. A computer readable storage medium storing a computer program or at least one of a suite of computer programs according to claim 6.
